(19) Europäisches Patentamt / European Patent Office / Office européen des brevets

(11) **EP 2 688 177 B1**

(12) **FASCICULE DE BREVET EUROPEEN**

(45) Date de publication et mention
de la délivrance du brevet:
**28.04.2021   Bulletin 2021/17**

(21) Numéro de dépôt: **13177160.2**

(22) Date de dépôt: **19.07.2013**

(51) Int Cl.:
*H02J 7/00* *(2006.01)*          *H02J 3/26* *(2006.01)*
*B60L 53/14* *(2019.01)*        *B60L 53/16* *(2019.01)*
*B60L 53/30* *(2019.01)*        *B60L 53/18* *(2019.01)*
*B60L 53/31* *(2019.01)*        *B60L 53/63* *(2019.01)*
*B60L 53/65* *(2019.01)*        *B60L 53/68* *(2019.01)*
*B60L 55/00* *(2019.01)*

(54) **Procédé et dispositif de distribution d'énergie électrique**

Verfahren und Vorrichtung zur Verteilung von elektrischer Energie

Method and device for supplying electric power

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **20.07.2012   FR 1257024**

(43) Date de publication de la demande:
**22.01.2014   Bulletin 2014/04**

(73) Titulaire: **Schneider Electric Industries SAS
92500 Rueil-Malmaison (FR)**

(72) Inventeur: **Paupert, Marc
38220 St Jean de Vaulx (FR)**

(74) Mandataire: **Lavoix
62, rue de Bonnel
69448 Lyon Cedex 03 (FR)**

(56) Documents cités:
WO-A2-2010/091743          WO-A2-2012/058421
JP-A- 2011 078 288          US-A1- 2005 057 320
US-A1- 2006 132 085          US-A1- 2009 189 456
US-A1- 2011 202 192

**Description**

La présente invention concerne un procédé de distribution d'énergie électrique au sein d'un système comprenant, entre autres, un réseau de distribution d'énergie électrique, des bornes de recharge pour véhicules électriques et des véhicules électriques. L'invention concerne également un dispositif de distribution d'énergie électrique destiné à mettre en œuvre un tel procédé.

Dans le domaine des bornes de recharge pour véhicule électrique, on connait des procédés et dispositifs qui permettent de gérer la distribution d'énergie électrique entre un système comprenant des bornes de recharge et des véhicules électriques raccordés à ces bornes. Du fait de leur mobilité, ces véhicules sont considérés comme des charges non prévisibles. De plus, ces véhicules peuvent être de nature très différente en termes de nombre de phases utilisées pour leur recharge, de capacité de charge et de décharge et de communication avec la borne de recharge. Il est connu des aménagements dans le but d'anticiper qu'un même type de véhicule monophasé ne vienne pas solliciter la même phase de chaque borne, par exemple en alternant l'ordre de la disposition des phases d'une borne à une autre, ceci afin de prévenir une surcharge sur l'une des phases.

Toutefois, le type de véhicule électrique peut être différent. Le véhicule peut être monophasé, c'est-à-dire présenter une connectique de raccord à la borne imposant un prélèvement d'énergie électrique sur l'une des trois phases de la borne, cette phase pouvant varier selon la marque du véhicule. Le véhicule peut également être triphasé, c'est-à-dire présenter une connectique de raccord imposant un prélèvement sur les trois phases de la borne. L'intérêt de l'équilibrage précité reste donc très limité car non adaptable à la diversité des situations que l'on peut rencontrer US 2009/189456 A1 divulgue un procédé d'équilibrage de distribution d'énergie électrique au sein d'un système comprenant un réseau de distribution de courant triphasé et des bornes de recharge pour véhicules électriques monophasés ou triphasés. JP2011078288A divulgue un procédé d'équilibrage de distribution d'énergie électrique au sein d'un système comprenant un réseau de distribution de courant triphasé et des bornes de recharge pour véhicules électriques monophasés.

Le but de l'invention est donc de proposer un procédé de distribution d'énergie électrique permettant de répartir les charges des véhicules électriques de manière équilibrée sur l'ensemble des phases des bornes électriques sur lesquelles ces véhicules sont raccordés.

A cet effet, l'invention a pour objet un procédé de distribution d'énergie électrique au sein d'un système comprenant au moins un réseau de distribution de courant triphasé, des bornes de recharge pour véhicules électriques raccordées au réseau de distribution par trois conducteurs de phase et un conducteur de neutre, des véhicules électriques équipés chacun d'au moins une batterie d'accumulateurs, des moyens de mesure de courants et tensions électriques au sein du système et un dispositif de supervision apte à communiquer avec les véhicules électriques et les moyens de mesure, le réseau de distribution étant apte à fournir ou recevoir une énergie électrique aux bornes de recharge alors que les véhicules électriques sont aptes à se recharger ou se décharger sur ces bornes via une liaison électrique monophasée ou triphasée. Ce procédé comprend des étapes consistant à identifier une arrivée d'un véhicule électrique à une borne lors d'une étape a), identifier des besoins énergétiques de ce véhicule électrique lors d'une étape b), et réaliser le transfert d'énergie vers ou à partir de la batterie d'accumulateurs de ce véhicule électrique lors d'une étape d).

Ce procédé de distribution d'énergie électrique est caractérisé en ce qu'il comprend au moins une étape c) supplémentaire postérieure à l'étape b) et antérieure à l'étape d), d'affectation d'au moins une phase de courant électrique acheminée par l'un des trois conducteurs de phase à la borne de recharge sur laquelle arrive le véhicule électrique et en ce que lorsque le véhicule électrique arrivant à une borne est triphasé, et lorsque l'une des phases ne peut accepter de charge supplémentaire, les affectations des charges sur les phases des bornes sont modifiées préalablement à la connexion effective du véhicule triphasé à la borne, afin d'équilibrer les charges sur les trois phases.

Suivant d'autres aspects avantageux de l'invention, le procédé de distribution d'énergie électrique comprend une ou plusieurs des caractéristiques suivantes, prises isolément ou dans toute combinaison techniquement admissible :

- L'étape c) supplémentaire comprend au moins les sous-étapes suivantes : c1) déterminer des niveaux d'utilisation de chacune des phases, c2) actionner un commutateur pour l'affectation d'au moins une phase sur la borne de recharge.

- Lorsque le véhicule électrique arrivant à une borne est monophasé, la phase qui lui est affectée pour sa recharge est celle qui est la moins affectée aux véhicules déjà raccordés.

- Lors de la modification des affectations des charges sur les phases des bornes, la charge correspondant à un véhicule monophasé déjà raccordé à une borne est basculée sur une autre phase.

- Lors de la modification des affectations de charges sur les phases des bornes, la charge est basculée sur la phase la moins sollicitée.

- Le procédé comprend une étape consistant à imposer pour chaque phase des consignes en courant pour les transferts d'énergie électrique entre les bornes et les véhicules électriques.

- Les consignes en courant sont telles qu'elles permettent de s'approcher au mieux des limites du contrat de distribution.

L'invention a également pour objet un dispositif de distribution d'énergie électrique comprenant au moins un réseau de distribution de courant triphasé, des bornes de recharge pour véhicules électriques raccordées au réseau de distribution par trois conducteurs de phase et un conducteur de neutre, des véhicules électriques équipés chacun d'au moins une batterie d'accumulateurs, des moyens de mesure de courants et tensions électriques au sein du système, un dispositif de supervision apte à communiquer avec les véhicules électriques et les moyens de mesure, des moyens d'identification d'une arrivée d'un véhicule électrique à une borne de recharge, des moyens d'identification des besoins énergétiques du véhicule électrique et des moyens de réalisation d'un transfert d'énergie vers ou à partir de la batterie d'accumulateurs du véhicule électrique. Le réseau de distribution est apte à fournir ou recevoir une énergie électrique aux bornes de recharge et les véhicules électriques sont aptes à se recharger ou se décharger sur ces bornes via une liaison électrique monophasée ou triphasée. Ce dispositif est caractérisé en ce qu'il comprend des moyens de calculs configurés pour mettre en œuvre au moins une étape d'affectation d'au moins une phase de courant électrique acheminé par l'un des trois conducteurs de phase à la borne de recharge sur laquelle arrive le véhicule électrique.

Suivant d'autres aspects avantageux de l'invention, le dispositif de distribution d'énergie électrique comprend la caractéristique suivante :

- Les moyens de réalisation de l'étape d'affectation des phases pour chacune des bornes de recharge sont des organes d'aiguillage réalisés par des commutateurs électroniques.

Les caractéristiques et avantages de l'invention apparaitront à la lecture de la description qui va suivre, donnée uniquement à titre d'exemple non limitatif, et faite en référence aux dessins annexés, dans lesquels :

- la figure 1 est une représentation schématique d'un système comprenant un dispositif de distribution d'énergie électrique conforme à l'invention,
- la figure 2 est un schéma bloc d'un procédé de distribution d'énergie électrique conforme à l'invention mis en œuvre avec le système de la figure 1,
- la figure 3 est un chronogramme représentant, pour un scénario donné, l'évolution temporelle des puissances consommées sur chaque conducteur de phase lors de la charge de véhicules raccordés aux bornes,
- la figure 4 est une représentation schématique d'une borne en communication avec un véhicule et d'un dispositif de supervision visibles à la figure 1,
- la figure 5 est un schéma électrique d'un commutateur visible à la figure 4, et

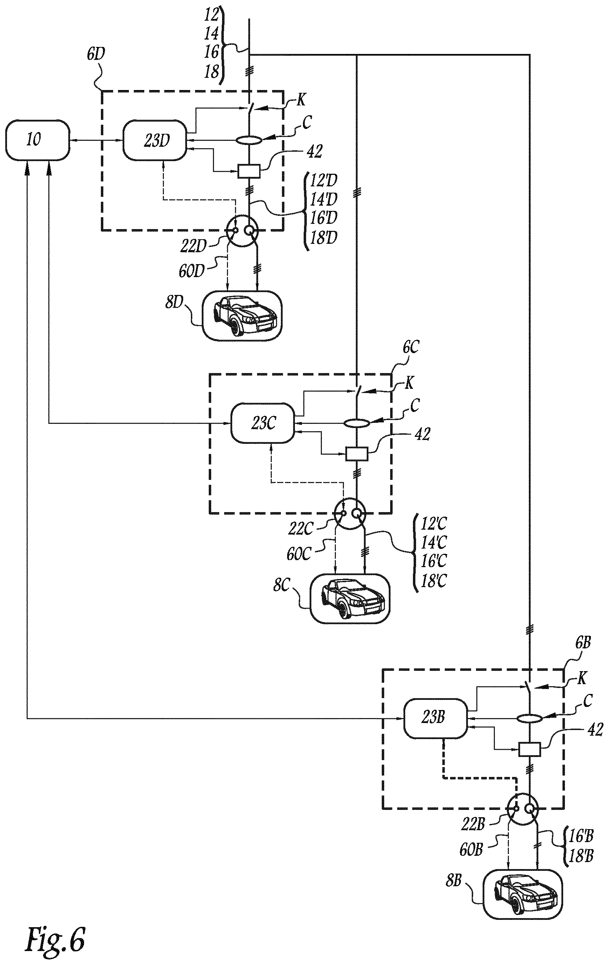

- la figure 6 est une représentation schématique de trois bornes en communication avec un dispositif de supervision, et dont deux bornes sont raccordées à deux véhicules triphasés tandis qu'une borne est raccordée à un véhicule monophasé.

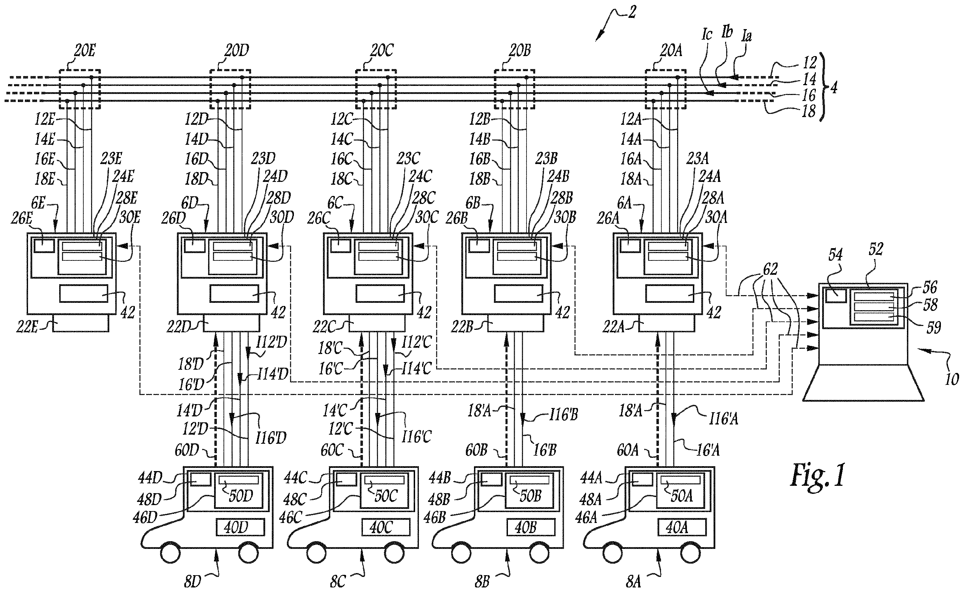

Sur la figure 1, un système 2 comprend un réseau électrique 4, cinq bornes 6A, 6B, 6C, 6D et 6E de recharge pour véhicules électriques, quatre véhicules électriques 8A, 8B, 8C et 8D raccordés à quatre bornes 6A à 6D et un dispositif de supervision 10. Dans le mode de réalisation représenté à la figure 1, les véhicules 8A et 8B raccordés aux bornes 6A et 6B sont des véhicules monophasés, c'est-à-dire que leur raccordement aux bornes 6A et 6B s'effectue au moyen d'une liaison électrique constituée d'un conducteur de phase et d'un conducteur de neutre. De même, les véhicules 8C et 8D raccordés aux bornes 6C et 6D sont des véhicules triphasés, c'est-à-dire que leur raccordement s'effectue au moyen d'une liaison électrique constituée de trois conducteurs de phases et d'un conducteur de neutre. La borne 6E n'est raccordée à aucun véhicule électrique ; elle est en attente du raccordement d'un véhicule supplémentaire.

Les bornes 6A à 6E peuvent être raccordées indifféremment à des véhicules 8A à 8D monophasés ou triphasés. Ainsi, le raccordement d'un véhicule triphasé à l'une des bornes 6A, 6B se fait via trois conducteurs de phase dont un seul est visible à la figure 1 et un conducteur de neutre visible à la figure 1. De même, le raccordement d'un véhicule monophasé à l'une des bornes 6C, 6D est effectué via un unique conducteur de phase parmi les trois conducteurs visibles à la figure 1 et un conducteur de neutre également visible à la figure 1.

Le réseau électrique 4 est un réseau de distribution d'énergie électrique triphasé comprenant trois premiers conducteurs 12, 14, 16 de phase et un premier conducteur 18 de neutre.

Chaque borne 6A à 6E est reliée aux conducteurs 12, 14, 16, 18 via un départ 20A, 20B, 20C, 20D ou 20E. Ces départs 20A à 20E comprennent chacun respectivement trois deuxièmes conducteurs de phase 12A, 14A, 16A, 12B, 14B, 16B, 12C, 14C, 16C, 12D, 14D, 16D, 12E, 14E, 16E et un deuxième conducteur de neutre 18A, 18B, 18C, 18D, 18E. Ainsi, chacune des bornes 6A à 6E est reliée aux premiers conducteurs 12, 14, 16, 18 du réseau électrique 4 via les deuxièmes conducteurs 12A à 18A, 12B à 18B, 12C à 18C, 12D à 18D, 12E à 18E des départs 20A à 20E.

Comme visible à la figure 1, les bornes 6A à 6E comprennent des prises 22A, 22B, 22C, 22D, 22E de raccordement des bornes 6A à 6D aux véhicules électriques 8A à 8D via des troisièmes conducteurs de phase 16'A, 16'B, 12'C, 14'C, 16'C, 12'D, 14'D, 16'D et de neutre 18'A, 18'B, 18'C, 18'D. En pratique, les deuxièmes 18A, 18B, 18C, 18D et troisièmes 18'A, 18'B, 18'C, 18'D conducteurs de neutre sont identiques alors que les troisièmes conducteurs de phase 16'A, 16'B, 12'C, 14'C, 16'C, 12'D, 14'D, 16'D sont des permutations des deuxièmes conducteurs de phase 12A, 14A, 16A, 12B, 14B, 16B, 12C, 14C, 16C, 12D, 14D, 16D. Par exemple, les troisièmes conducteurs 12'C, 14'C, 16'C sont respectivement identiques aux deuxièmes conducteurs 12C, 16C, 14C, ou encore aux deuxièmes conducteurs 16C, 14C, 12C. Comme les véhicules 8A et 8B sont des véhicules monophasés, la figure 1 montre un unique troisième conducteur de phase 16'A, 16'B raccordant les bornes 6A et 6B aux véhicules monophasés 8A et 8B.

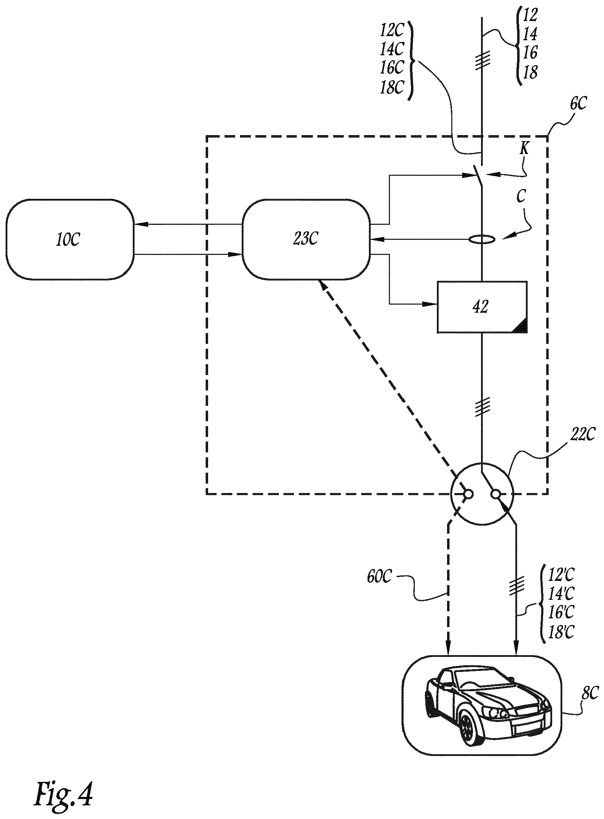

Chaque borne 6A à 6E comprend également un interrupteur K et un capteur de courant C visibles à la figure 4 pour la borne 6C. Les interrupteurs K permettent d'autoriser le passage du courant électrique des deuxièmes conducteurs de phase vers les troisièmes conducteurs de phase, tandis que les capteurs de courant C mesurent l'intensité des courants traversant chacun des troisièmes conducteurs de phase.

Chacune des bornes 6A à 6E comprend également une première unité d'information 23A, 23B, 23C, 23D, 23E comprenant une mémoire 24A, 24B, 24C, 24D, 24E, un processeur 26A, 26B, 26C, 26D, 26E associé à cette mémoire 24A à 24E, ainsi qu'un premier logiciel d'acquisition 28A, 28B, 28C, 28D, 28E et un premier logiciel de communication 30A, 30B, 30C, 30D, 30E.

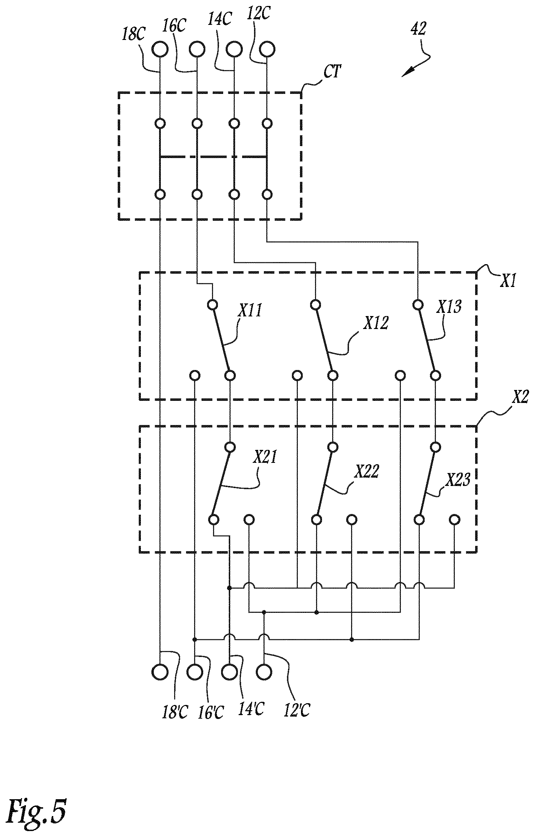

Chacune des bornes 6A à 6E comprend également un organe d'aiguillage 42, appelé aussi commutateur. Cet organe 42 est apte à imposer la permutation précitée des deuxièmes conducteurs de phase 12A à 16D pour obtenir la configuration des troisièmes conducteurs de phase 16'A, 16'B, 12'C, 14'C, 16'C, 12'D, 14'D, 16'D. Un exemple d'un organe d'aiguillage 42 utilisé dans la borne 6C est représenté sur la figure 5 et comprend un contacteur CT permettant d'autoriser le passage du courant des deuxièmes conducteurs 12C à 18C vers les troisièmes conducteurs 12'C à 18'C ainsi que deux groupes X1, X2 d'interrupteurs. Ces deux groupes X1, X2 comprennent chacun trois interrupteurs X11, X12, X13 et X21, X22, X23 qui, en fonction de leur position, permettent d'imposer la configuration des troisièmes conducteurs de phase comme une permutation des deuxièmes conducteurs de phase. Dans l'exemple de la figure 5, la configuration des groupes X1 et X2 d'interrupteurs X11 à X23 réalise la permutation permettant de raccorder les deuxièmes conducteurs 12C, 14C, 16C respectivement aux troisièmes conducteurs 16'C, 12'C, 14'C.

Les véhicules électriques 8A à 8D sont chacun munis d'une ou plusieurs batteries d'accumulateurs 40A, 40B, 40C, 40D. Chaque véhicule 8A à 8D comprend également une deuxième unité d'information 44A, 44B, 44C, 44D comprenant une mémoire 46A, 46B, 46C, 46D et un processeur 48A, 48B, 48C, 48D associé à cette mémoire. Chaque mémoire 46A à 46D comprend un deuxième logiciel de communication 50A, 50B, 50C, 50D.

Le dispositif de supervision 10 comprend une mémoire 52 ainsi qu'un processeur 54 associé à cette mémoire 52. Cette mémoire 52 comprend un deuxième logiciel 56 d'acquisition de données, un troisième logiciel 58 de communication, ainsi qu'un logiciel de calcul 59.

Le réseau 4 de distribution est apte à fournir un courant électrique Ia, Ib, Ic triphasé à chacune des bornes 6A à 6E, elles-mêmes aptes à fournir un courant I16'A, I16'B, I12'C, I14'C, I16'C, I12'D, I14'D, I16'D aux véhicules 8A à 8D afin d'assurer un transfert d'énergie avec leur(s) batterie(s) d'accumulateurs 40A à 40D. Ce transfert d'énergie s'effectue des bornes 6A à 6D vers les véhicules 8A à 8D, afin de charger les batteries d'accumulateurs 40A à 40D. En variante, ce transfert d'énergie peut également se réaliser d'une batterie d'accumulateurs 40A à 40D vers une bornes 6A à 6D pour au moins l'un des véhicules électriques 8A à 8D.

La première unité 23A à 23D d'information est apte à communiquer via une première liaison 60A, 60B, 60C, 60D de données, avec la deuxième unité 44A à 44D d'information à l'aide des premiers 30A à 30D et deuxièmes 50A à 50D logiciels de communication. L'établissement de la liaison 60A à 60D permet à la borne 6A à 6D d'acquérir des données propres au véhicule 8A à 8D.

La première unité 23A à 23D est également apte à communiquer avec le dispositif de supervision 10 via une deuxième liaison 62 de données. La nature des données communiquées est, par exemple, la mesure des courants par les capteurs C des bornes 6A à 6D, ou encore le flux de données issu des premières liaisons 60. Ces deuxièmes liaisons 62 permettent une centralisation des données du système 2 dans le dispositif de supervision 10, permettant de commander l'organe d'aiguillage 42 de chaque borne 6A à 6D, en fonction de l'état de charge courant sur chaque phase de ces bornes.

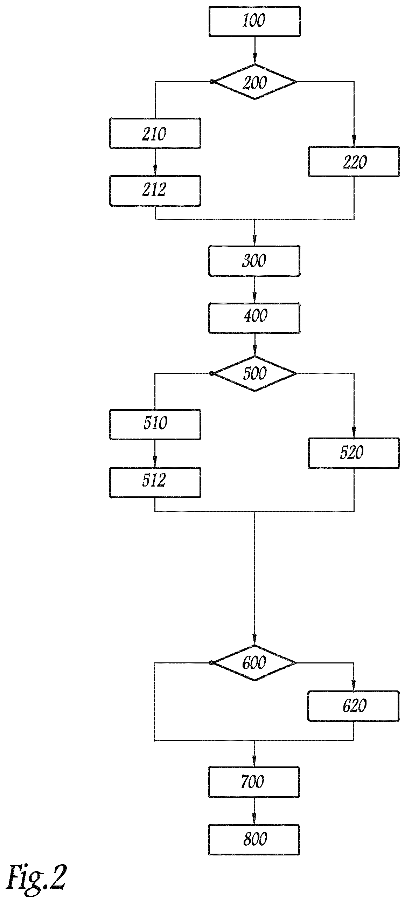

Le procédé de distribution d'énergie électrique du système 2 est expliqué à l'aide de la figure 2.

Lors d'une première étape 100, un véhicule électrique 8A à 8D vient se raccorder à l'une des bornes 6A à 6E disponible du système 2. Lors du raccordement de ce véhicule électrique 8A à 8D à la borne 6A à 6D par un usager, ce dernier communique au dispositif de supervision 10 des informations conditionnant le raccordement du véhicule 8A à 8D à la borne 6A à 6D via une interface non visible sur les figures. Ces informations sont, par exemple, la durée de connexion souhaité, ou encore l'autonomie souhaitée pour les batteries 40A à 40D du véhicule.

Lors d'une deuxième étape 200, le logiciel de communication 30A à 30D de la borne 6A à 6D teste si le véhicule électrique 8A à 8D est un véhicule communicant, c'est-à-dire un véhicule apte à communiquer de manière automatique à la première unité d'information 23A à 23D de la borne 6A à 6D des informations concernant, par exemple, le nombre de phases utilisées par le véhicule 8A à 8D pour se raccorder à la borne 6A à 6D, le courant nominal de charge de la batterie 40A à 40D d'accumulateurs du véhicule 8A à 8D, la consommation moyenne du véhicule électrique, l'état de charge de la batterie ou encore l'autonomie restante du véhicule. Si le véhicule 8A à 8D raccordé à la borne est un véhicule communiquant, les données précitées sont automatiquement communiquées, lors d'une étape 220, à l'unité d'information 23A à 23D via la première liaison 60.

Dans le cas contraire, une identification du ou des conducteurs raccordés à la borne 6A à 6D, ainsi qu'une identification du courant nominal de charge des batteries d'accumulateurs 40A à 40D est réalisée automatiquement lors d'une étape 210, les conditions de ces identifications étant cohérentes en durée avec le non déclenchement des dispositifs de protection contre les surintensités. Puis, lors d'une étape 212, l'usager communique manuellement, d'une manière similaire à l'étape 100, les données complémentaires précitées.

Lors d'une étape 300, les données récupérées lors de l'étape 212 ou 220 sont transmises au dispositif de supervision 10. Parallèlement à ces données, le dispositif de supervision 10 acquiert d'autres données propres au système. Ces données sont de trois types. Le premier type de données concerne des données liées au contrat de consommation : limite de puissance affectée au parc de véhicules électriques et puissance disponible pour chaque phase pour le véhicule électrique arrivant. Le deuxième type de données concerne des valeurs de courants directs, inverses et homopolaires au sein du système 2, c'est-à-dire des informations sur l'équilibrage des phases. Enfin, un dernier type de données est une information sur les tensions au niveau des départs 20A à 20E des bornes 6A à 6E, afin de surveiller que celles-ci restent dans les tolérances du contrat énergétique.

Lors d'une l'étape 400, le dispositif de supervision 10 calcule, en fonction des données acquises lors des étapes 200 et 300, l'énergie à fournir à la batterie 40A à 40D de chaque véhicule électrique 8A à 8D raccordé sur le système. Cette énergie Wf est, par exemple, définie par l'équation [1] suivante :

$$Wf = C\,(As - Ar) \qquad [1]$$

où C est la consommation moyenne en kilowattheures par kilomètre, As l'autonomie souhaitée en kilomètres et Ar l'autonomie restante en kilomètres.

Cette énergie Wf peut également, par exemple, être définie par l'équation [2] suivante :

$$Wf = Wt\,(SOCs - SOCr) \qquad [2]$$

où Wt est la capacité énergétique totale de la batterie en kilowattheures, SOCs est l'état de charge souhaité de la batterie en pourcentage, et SOCr est l'état de charge restant de la batterie en pourcentage.

Chacun des deux précédents calculs de l'énergie Wf peut être pondéré par une donnée propre au véhicule pour tenir compte du vieillissement de la batterie.

Lors d'une étape 500, le logiciel de communication 30A à 30D de la borne 6A à 6D teste si le véhicule 8A à 8D raccordé à la borne 6A à 6D est un véhicule monophasé.

Si le véhicule 8A à 8D est triphasé, l'étape 510 réorganise l'affectation des phases sur les différentes bornes 6A à 6D, afin d'équilibrer les charges sur les différentes phases, ceci en faisant basculer un véhicule monophasé d'une phase surchargée vers une phase souschargée. A la suite de cette étape 510, une étape 512 réalise la connexion effective du véhicule triphasé sur la borne en fermant les interrupteurs du contacteur CT de cette borne.

Dans le cas où le véhicule est monophasé, la phase qui lui est proposée pour recharger sa batterie 40A à 40D est affectée dynamiquement. C'est-à-dire qu'on lui affecte lors d'une étape 520 la phase la moins chargée.

Une étape 600 teste si le véhicule 8A à 8D est un véhicule intelligent, c'est-à-dire apte à communiquer avec la borne 6A à 6D de telle manière que la borne détermine un courant optimal de recharge pour chaque phase 16'A, 16'B, 12'C à 16'C, 12'D à 16'D. Ce courant I16'A, I16'B, I12'C à I16'C, I12'D à I16'D optimal permet une recharge rapide, tout en respectant l'équilibre du réseau et du contrat énergétique. Si tel est le cas, une étape 620 consiste à paramétrer les courants de charge sur la phase, pour un véhicule monophasé, ou les phases, pour un véhicule triphasé. Les paramètres de consignation peuvent être, par exemple, les valeurs du courant actif et réactif à fournir ou consommer pour chacune des trois phases. Ces consignes sont de nature à rééquilibrer le réseau et optimisent donc l'utilisation du contrat.

Une étape 700 consiste à réaliser le transfert d'énergie entre la borne 6A à 6D et le véhicule 8A à 8D électrique. Ce transfert d'énergie peut être une charge lorsque le raccord du véhicule 8A à 8D à la borne 6A à 6D a pour but de recharger ces batteries 40A à 40D. Lorsque le véhicule est apte à fournir de l'énergie, ce transfert d'énergie peut consister à la décharge d'une partie au moins de la batterie 40A à 40D du véhicule 8A à 8D.

Enfin, une dernière étape 800 consiste à comptabiliser la quantité d'énergie transférée entre la borne 6A à 6D et le véhicule électrique 8A à 8D en kilowattheures afin de mieux gérer les contrats énergétiques en cours. Cette étape peut commencer dès le début de l'étape 700.

Afin d'illustrer le procédé de la figure 2, on prend l'exemple de l'arrivée d'un véhicule monophasé puis d'un véhicule triphasé.

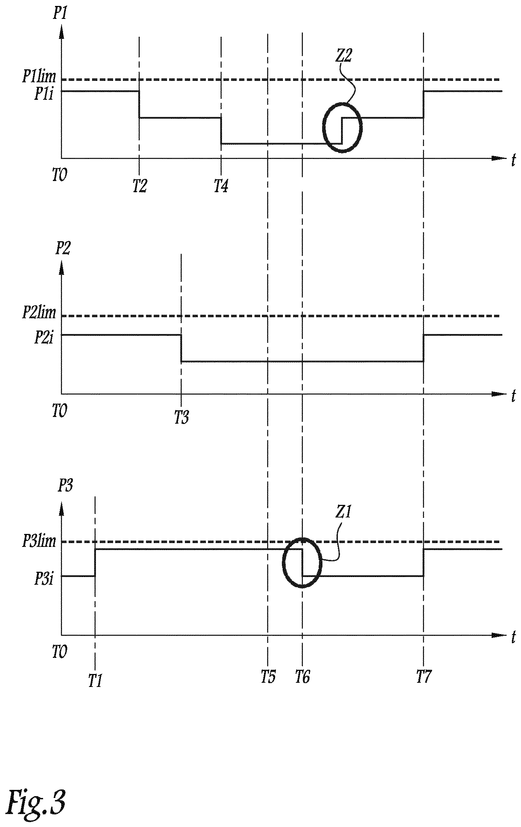

Les trois chronogrammes de la figure 3 représentent les puissances électriques P1, P2 et P3 transitant par les conducteurs de phase 12, 14 et 16, appelés également respectivement première L1, deuxième L2 et troisième L3 phases, en amont des bornes 6A à 6E. Dans cet exemple et comme visible à la figure 3, les limites en puissance du contrat de distribution sont représentées par la ligne pointillée au niveau des valeurs de puissance limite P1lim, P2lim et P3lim. A l'instant initial T0, les puissances P1i, P2i, P3i associées aux courants traversant les conducteurs de phase sont telles que visibles sur les trois chronogrammes et tiennent compte des charges connectées sur ces trois différentes phases. Ainsi, on remarque que le conducteur de phase 12 est plus sollicité que le conducteur de phase 14, qui est plus sollicité que le conducteur de phase 16. A un instant T1, un véhicule monophasé, par exemple le véhicule 8A, arrive à la borne 6A disponible et la charge de sa batterie 40A est affectée au conducteur de la troisième phase. On remarque ainsi, à l'instant T1, l'ajout d'une charge sur le chronogramme représentant l'évolution de la puissance P3. A un instant compris entre l'instant T1 et un instant T5, on assiste à trois baisses successives de puissance sur les deux premières phases. Ces baisses de puissances sont significatives d'une fin de charge d'un véhicule 8B à 8D ou d'un départ d'un véhicule sur les deux premières phases L1 et L2. Ainsi, à l'instant T5, les première L1 et deuxième L2 phases sont aptes à recevoir une nouvelle charge, alors que la puissance consommée sur la troisième phase est proche de la limite en puissance P3lim du contrat de distribution. A l'instant T5, un véhicule triphasé, par exemple le véhicule 8C, se présente à la borne 6C pour un raccordement. Il est détecté par la borne 6C qui transmet son identification au dispositif de supervision 10. La troisième phase L3 ne pouvant accepter de charge supplémentaire, le dispositif de supervision 10 modifie donc, à un instant T6 et à l'aide des commutateurs 42, l'affectation des phases L1, L2, L3 sur un des véhicules connectés sur la troisième phase, dans l'exemple le véhicule 8A, en le basculant sur la phase qui est la moins chargée ou la moins sollicitée, c'est-à-dire la première phase L1. En pratique, le changement d'affectation d'un véhicule monophasé de la troisième L3 vers la première phase L2 est visible sur des zones Z1 et Z2 de la figure 3 représentant respectivement une baisse de puissance de charge sur la troisième phase L3 avant une augmentation de puissance de charge sur la première phase L1. Le décalage temporel visible à la figure 3 peut être plus ou moins important selon le dispositif choisi pour effectuer l'affectation des phases. Le décalage visible ici a uniquement pour but de montrer de manière pédagogique que la hausse de puissance visible sur la zone Z2 est postérieure à la baisse de puissance visible sur la zone Z1. En pratique le changement d'affectation de la phase se fait de manière quasi instantanée. Ainsi, la troisième phase L3 peut à nouveau recevoir une charge supplémentaire et le véhicule triphasé peut se raccorder à la borne pour réaliser sa recharge à partir d'un instant T7.

En variante, le véhicule initialement raccordé sur la troisième phase L3 est basculé sur la deuxième phase L2 dans le cas où celle-ci n'est pas trop sollicitée, c'est-à-dire si l'acceptation d'un véhicule supplémentaire n'entraîne pas sur cette phase une puissance consommée supérieure à la limite imposée par le contrat de distribution.

En variante encore, l'arrivée d'un véhicule à une borne peut nécessiter un changement d'affectation de plusieurs phases sur les autres bornes du système. Cela est le cas notamment lorsque le véhicule arrivant est triphasé et que deux des phases, par exemple les phases L1 et L2, ont des charges importantes alors que la troisième phase L3 est peu sollicitée.

Ainsi, lorsqu'un nouveau véhicule monophasé arrive, l'affectation d'une phase permet l'optimisation du contrat en évitant la saturation de l'une des phases. En pratique, les commutateurs 42 permettent de recevoir des véhicules supplémentaires.

Le système 2 de distribution selon l'invention et son procédé associé permet ainsi lorsqu'un véhicule 8A à 8D électrique arrive pour un transfert d'énergie sur l'une des bornes 6A à 6D du système 2 de modifier l'affectation des phases sur une ou plusieurs bornes afin d'optimiser les puissances consommées sur chaque phase et de respecter les limites de puissance du contrat de distribution d'énergie électrique.

En outre, le dispositif de supervision 10, les véhicules électriques 8A à 8D et les bornes 6A à 6D permettent d'identifier chaque véhicule électrique, ainsi que sa capacité à communiquer automatiquement. En particulier, si le véhicule est apte à communiquer des données sur les charges de sa batterie 40A à 40D, le dispositif de supervision 10 permet d'optimiser la charge de cette batterie en s'approchant au plus près des valeurs limites de puissance consommée P1lim, P2lim et P3lim du contrat de distribution et en permettant un équilibre des charges du réseau 4.

Le système 2 associé au procédé est donc adaptable à des véhicules 8A à 8D monophasés ou triphasés, communiquant ou non communiquant pour des données de base, ainsi qu'intelligent ou non pour la communication des données en charge des batteries 40A à 40D de véhicule 8A à 8D électrique.

Le système 2 est adapté à tout type de véhicule triphasé, y compris ceux dont le raccord à une borne se fait uniquement à l'aide de trois conducteurs de phase, sans conducteur de neutre.

Le système 2 est également adapté à tout type de véhicule hybride disposant d'une prise permettant le transfère d'énergie entre leur (ou leurs) batterie(s) et une borne de recharge.

Dans le mode de réalisation présenté, les calculs et l'affectation des phases L1, L2, L3 se réalisent de manière totalement automatique.

Divers aménagements et variantes au dispositif et procédé décrit jusqu'ici sont par ailleurs envisageables. A titre d'exemple :

- le nombre de bornes est variable,
- le type de véhicule électrique est variable. Chaque véhicule peut avoir, entre autres, une alimentation monophasée ou triphasée, être communiquant ou non, être intelligent ou non, être en mesure de charger ou de décharger sa batterie,
- les moyens de mesure, de calcul et de commande peuvent être localisés à des endroits différents que ceux représentés sur les figures annexées ;

- les commutateurs peuvent être de nature différente comme des commutateurs électroniques IGBT par exemple.

**Revendications**

1.  Procédé de distribution d'énergie électrique au sein d'un système comprenant au moins les éléments suivants :

    - un réseau (4) de distribution de courant triphasé,
    - des bornes (6A, 6B, 6C, 6C, 6D) de recharge pour véhicules (8A, 8B, 8C, 8D) électriques raccordées au réseau (4) de distribution par trois conducteurs de phase (12A, 14A, 16A, 12B, 14B, 16B, 12C, 14C, 16C, 12D, 14D, 16D, 12E, 14E, 16E) et un conducteur de neutre (18A, 18B, 18C, 18D, 18E),
    - des véhicules (8A à 8D) électriques équipés chacun d'au moins une batterie (40A, 40B, 40C, 40D) d'accumulateurs,
    - des moyens de mesure de courants (C) et tensions électriques au sein du système (2),
    - un dispositif de supervision (10) apte à communiquer avec les véhicules (8A à 8D) électriques et les moyens de mesure,

    le réseau de distribution étant apte à fournir ou recevoir une énergie électrique aux bornes (6A à 6E) de recharge, les véhicules (8A à 8D) électriques étant aptes à se recharger ou se décharger sur ces bornes (6A à 6E) via une liaison électrique monophasée ou triphasée,
    et le procédé comprenant les étapes suivantes :

    - a) identifier (100) une arrivée d'un véhicule (8A à 8D) électrique à une borne (6A à 6E) de recharge,
    - b) identifier (212, 220) des besoins énergétiques du véhicule (8A à 8D) électrique, et
    - d) réaliser (700) le transfert d'énergie vers ou à partir de batterie (40A à 40D) d'accumulateurs du véhicule (8A à 8D) électrique, le procédé comprenant au moins une étape c) supplémentaire (510, 520), postérieure à l'étape b) et antérieure à l'étape d), d'affectation d'une phase (L1, L2, L3) au moins de courant électrique acheminée par l'un des trois conducteurs de phase à la borne (6A à 6E) de recharge sur laquelle arrive un véhicule (8A à 8D) électrique, **caractérisé en ce que** lorsque le véhicule (8C) électrique arrivant à une borne (6C) est triphasé, et lorsque l'une des phases (16) ne peut accepter de charge supplémentaire, les affectations des charges sur les phases des bornes (6A et 6B) sont modifiées préalablement à la connexion effective du véhicule triphasé à la borne, afin d'équilibrer les charges sur les trois phases.

2.  Procédé selon la revendication 1, **caractérisé en ce que** l'étape c) supplémentaire (510, 520) comprend au moins les sous-étapes suivantes :

    - c1) déterminer des niveaux d'utilisation de chacune des phases,
    - c2) actionner un commutateur (42) pour l'affectation d'au moins une phase sur la borne (6A à 6D) de recharge.

3.  Procédé selon l'une des revendications précédentes, **caractérisé en ce que** lorsque le véhicule (8A) électrique arrivant à une borne (6A) est monophasé, la phase qui lui est affectée pour sa recharge est celle qui est la moins affectée aux véhicules déjà raccordés aux autres bornes (6B à 6E).

4.  Procédé selon la revendication 1, **caractérisé en ce que** lors de la modification des affectations des charges sur les phases (L1, L2, L3) des bornes (6A à 6E), la charge correspondant à un véhicule monophasé (8A) déjà raccordée à une borne (6A) est basculée sur une autre phase (L1, L2).

5.  Procédé selon la revendication 4, **caractérisé en ce que** lors de la modification des affectations de charges sur les phases (L1, L2, L3) des bornes (6A à 6E), la charge est basculée sur la phase (L1) la moins sollicitée.

6.  Procédé selon l'une des revendications précédentes, **caractérisé en ce qu'**il comprend une étape consistant à imposer pour chaque conducteur de phase (16'A, 16'B, 12'C, 14'C, 16'C, 12'D, 14'D, 16'D) des consignes en courant (I16'A, I16'B, I12'C, I14'C, I16'C, I12'D, I14'D, I16'D) pour les transferts d'énergie électrique entre les bornes (6A à 6D) et les véhicules (8A à 8D) électriques.

7.  Procédé selon la revendication 6, **caractérisé en ce que** les consignes en courant (I16'A, I16'B, I12'C, I14'C, I16'C, I12'D, I14'D, I16'D) sont telles qu'elles permettent de s'approcher au mieux des limites (P1lim, P2lim, P3lim) du contrat de distribution.

8.  Système comprenant au moins :

    - un réseau (4) de distribution de courant triphasé,
    - des bornes (6A à 6E) de recharge pour véhicules (8A à 8D) électriques raccordées au réseau (4) de distribution par trois conducteurs (12A, 14A, 16A, 12B, 14B, 16B, 12C, 14C, 16C, 12D, 14D, 16D, 12E 14E, 16E) de phase et un conducteur de neutre (18A, 18B, 18C, 18D, 18E),

- des véhicules (8A à 8D) électriques équipés chacun d'au moins une batterie (40A à 40D) d'accumulateurs,

- des moyens de mesure de courants (C) et tensions électriques au sein du système,

- un dispositif de supervision apte à communiquer avec les véhicules électriques et les moyens de mesure,

- des moyens d'identification d'une arrivée d'un véhicule (8A à 8D) électrique à une borne (6A à 6E) de recharge,

- des moyens d'identification des besoins énergétiques du véhicule électrique, et

- des moyens de réalisation d'un transfert d'énergie vers ou à partir de la batterie (40A à 40D) d'accumulateurs du véhicule (8A à 8D) électrique,

le réseau (4) de distribution étant apte à fournir ou recevoir une énergie électrique aux bornes (6A à 6E) de recharge et les véhicules (8A à 8E) électriques étant aptes à se recharger ou se décharger sur ces bornes (6A à 6E) via une liaison électrique monophasée ou triphasée et

un dispositif de distribution d'énergie électrique au sein du système, ledit dispositif de distribution d'énergie électrique comprenant des moyens de calculs (59) configurés pour mettre en œuvre au moins une étape c) d'affectation au véhicule (8A à 8D) électrique arrivant d'au moins une phase de courant électrique acheminé par l'un des trois conducteurs de phase (12A, 14A, 16A, 12B, 14B, 16B, 12C, 14C, 16C, 12D, 14D, 16D, 12E 14E, 16E) à la borne (6A à 6E) de recharge sur laquelle arrive le véhicule (8A à 8D) électrique, **caractérisé en ce que** ledit dispositif de distribution d'énergie électrique comprend des moyens de modification des affectations des charges sur les phases des bornes (6A et 6B), configurés pour, lorsque le véhicule (8C) électrique arrivant à une borne (6C) est triphasé, et lorsque l'une des phases (16) ne peut accepter de charge supplémentaire, modifier préalablement à la connexion effective du véhicule triphasé à la borne_les affectations des charges sur les phases des bornes (6A et 6B), afin d'équilibrer les charges sur les trois phases.

9. Système selon la revendication 8, **caractérisé en ce que** les moyens de réalisation de l'étape d'affectation des phases pour chacune des bornes (6A à 6E) de recharge sont des organes d'aiguillage (42) réalisés par des commutateurs électroniques.

**Patentansprüche**

1. Verfahren zur Verteilung von elektrischer Energie innerhalb eines System, das mindestens die folgenden Elemente umfasst:

   - ein dreiphasiges Stromverteilungsnetz (4),
   - Ladeanschlüsse (6A, 6B, 6C, 6C, 6D) für Elektrofahrzeuge (8A, 8B, 8C, 8D), die über drei Phasenleiter (12A, 14A, 16A, 12B, 14B, 16B, 12C, 14C, 16C, 12D, 14D, 16D, 12E, 14E, 16E) und einen Neutralleiter (18A, 18B, 18C, 18D, 18E) mit dem Verteilungsnetz (4) verbunden sind,
   - Elektrofahrzeuge (8A bis 8D), die jeweils mit mindestens einer Akkumulatorbatterie (40A, 40B, 40C, 40D) ausgerüstet sind,
   - Mittel zum Messen von elektrischen Strömen (C) und Spannungen im System (2),
   - eine Überwachungsvorrichtung (10), die geeignet ist, mit den Elektrofahrzeugen (8A bis 8D) und den Messmitteln zu kommunizieren,

   das Verteilungsnetz in der Lage ist, elektrische Energie an die Ladeanschlüsse (6A bis 6E) zu liefern oder zu empfangen, wobei die Elektrofahrzeuge (8A bis 8D) in der Lage sind, sich an diesen Anschlüssen (6A bis 6E) über eine einphasige oder dreiphasige elektrische Verbindung aufzuladen oder zu entladen,

   und das Verfahren die folgenden Schritte umfasst:

   - a) Identifizieren (100) einer Ankunft eines Elektrofahrzeugs (8A bis 8D) an einem Ladeanschluss (6A bis 6E),
   - b) Identifizieren (212, 220) des Energiebedarfs des Elektrofahrzeugs (8A bis 8D), und
   - d) Durchführen (700) der Übertragung von Energie zu oder von der Akkumulatorbatterie (40A bis 40D) des Elektrofahrzeugs (8A bis 8D),

   wobei das Verfahren nach dem Schritt b) und vor dem Schritt d) mindestens einen zusätzlichen Schritt c) (510, 520) des Zuordnens mindestens einer Phase (L1, L2, L3) des elektrischen Stroms, der von einem der drei Phasenleiter geführt wird, zu dem Ladeanschluss (6A bis 6E), an dem ein Elektrofahrzeug (8A bis 8D) ankommt, umfasst, **dadurch gekennzeichnet, dass**, wenn das an einem Anschluss (6C) ankommende Elektrofahrzeug (8C) dreiphasig ist und wenn eine der Phasen (16) keine zusätzliche Belastung aufnehmen kann, die Zuordnungen der Belastungen auf den Phasen der Anschlüsse (6A und 6B) vor dem eigentlichen Verbinden des dreiphasigen Fahrzeugs mit dem Anschluss geändert werden, um die Belastungen auf den drei Phasen auszugleichen.

2. Verfahren nach Anspruch 1, **dadurch gekenn-**

zeichnet, dass der zusätzliche Schritt c) (510, 520) mindestens die folgenden Teilschritte umfasst:

c1) Bestimmen der Nutzungsgrade jeder der Phasen,

c2) Betätigen eines Schalters (42) zur Zuordnung von mindestens einer Phase zu dem Ladeanschluss (6A bis 6D).

3. Verfahren nach einem der vorhergehenden Ansprüche, **dadurch gekennzeichnet, dass**, wenn das an einem Anschluss (6A) ankommende Elektrofahrzeug (8A) einphasig ist, die Phase, die ihm für seine Aufladung zugeordnet ist, diejenige ist, die den bereits an den anderen Anschlüssen (6B bis 6E) angeschlossenen Fahrzeugen am wenigsten zugeordnet ist.

4. Verfahren nach Anspruch 1, **dadurch gekennzeichnet, dass** bei der Änderung der Zuordnungen der Belastungen auf den Phasen (L1, L2, L3) der Anschlüsse (6A bis 6E) die Belastung, die einem bereits an einen Anschluss (6A) angeschlossenen einphasigen Fahrzeug (8A) entspricht, auf eine andere Phase (L1, L2) geschaltet wird.

5. Verfahren nach Anspruch 4, **dadurch gekennzeichnet, dass** bei Änderung der Zuordnungen der Belastungen auf den Phasen (L1, L2, L3) der Anschlüsse (6A bis 6E) die Belastung auf die am wenigsten beanspruchte Phase (L1) umgeschaltet wird.

6. Verfahren nach einem der vorhergehenden Ansprüche, **dadurch gekennzeichnet, dass** es einen Schritt umfasst, der darin besteht, für jeden Phasenleiter (16'A, 16'B, 12'C, 14'C, 16'C, 12'D, 14'D, 16'D) Stromsollwerte (I16'A, I16'B, I12'C, I14'C, I16'C, I12'D, I14'D, I16'D) für die Übertragungen von elektrischer Energie zwischen den Anschlüssen (6A bis 6D) und den elektrischen Fahrzeugen (8A bis 8D) festzulegen.

7. Verfahren nach Anspruch 6, **dadurch gekennzeichnet, dass** die Stromsollwerte (I16'A, I16'B, I12'C, I14'C, I16'C, I12'D, I14'D, I16'D) so beschaffen sind, dass sie es ermöglichen, sich den Grenzen (P1lim, P2lim, P3lim) des Verteilungsvertrags so weit wie möglich anzunähern.

8. System mindestens umfassend:

- ein dreiphasiges Stromverteilungsnetz (4),
- Ladeanschlüsse (6A bis 6E) für Elektrofahrzeuge (8A bis 8D), die über drei Phasenleiter (12A, 14A, 16A, 12B, 14B, 16B, 12C, 14C, 16C, 12D, 14D, 16D, 12E, 14E, 16E) und einen Neutralleiter (18A, 18B, 18C, 18D, 18E) mit dem Verteilungsnetz (4) verbunden sind,
- Elektrofahrzeuge (8A bis 8D), die jeweils mit mindestens einer Akkumulatorbatterie (40A bis 40D) ausgerüstet sind,
- Mittel zum Messen von elektrischen Strömen (C) und Spannungen im System,
- eine Überwachungsvorrichtung, die geeignet ist, mit den Elektrofahrzeugen und den Messmitteln zu kommunizieren,
- Mittel zum Identifizieren einer Ankunft eines Elektrofahrzeugs (8A bis 8D) an einem Ladeanschluss (6A bis 6E),
- Mittel zum Identifizieren des Energiebedarfs des Elektrofahrzeugs und
- Mittel zum Durchführen einer Übertragung von Energie zu oder von der Akkumulatorbatterie (40A bis 40D) des Elektrofahrzeugs (8A bis 8D),

wobei das Verteilungsnetz (4) in der Lage ist, elektrische Energie an die Ladeanschlüsse (6A bis 6E) zu liefern oder von diesen zu empfangen, und die Elektrofahrzeuge (8A bis 8E) in der Lage sind, sich an diesen Anschlüssen (6A bis 6E) über eine einphasige oder dreiphasige elektrische Verbindung aufzuladen oder zu entladen, wobei die Vorrichtung zum Verteilen von elektrischer Energie Berechnungsmittel (59) umfasst, die ausgebildet sind, mindestens einen Schritt c) des Zuordnens zu dem ankommenden Elektrofahrzeug (8A bis 8D) von mindestens einer Phase des elektrischen Stroms, der von einem der drei Phasenleiter (12A, 14A, 16A, 12B, 14B, 16B, 12C, 14C, 16C, 12D, 14D, 16D, 12E, 14E, 16E) zu dem Ladeanschluss (6A bis 6E) geführt wird, an dem das Elektrofahrzeug (8A bis 8D) ankommt, durchzuführen, **dadurch gekennzeichnet, dass** die Vorrichtung zum Verteilen von elektrischer Energie Mittel zur Änderung der Zuordnungen der Belastungen an den Phasen der Anschlüsse (6A und 6B) umfasst, die ausgebildet sind, wenn das an einem Anschluss (60) ankommende Elektrofahrzeug (80) dreiphasig ist und wenn eine der Phasen (16) keine zusätzliche Belastung aufnehmen kann, vor dem tatsächlichen Verbinden des dreiphasigen Fahrzeugs mit dem Anschluss die Zuordnungen der Belastungen auf den Phasen der Anschlüsse (6A und 6B) zu ändern, um die Belastungen auf den drei Phasen auszugleichen.

9. System nach Anspruch 8, **dadurch gekennzeichnet, dass** die Mittel zum Durchführen des Schritts der Zuordnung der Phasen für jeden der Ladeanschlüsse (6A bis 6E) Weichenelemente (42) sind, die durch elektronische Schalter gebildet werden.

**Claims**

1. Method for distributing electricity in a system comprising at least the following elements:

- a three-phase current distribution network (4),
- recharge terminals (6A, 6B, 6C, 6C, 6D) for electric vehicles (8A, 8B, 8C, 8D) connected to the distribution network (4) via three phase conductors (12A, 14A, 16A, 12B, 14B, 16B, 12C, 14C, 16C, 12D, 14D, 16D, 12E, 14E, 16E) and one neutral conductor (18A, 18B, 18C, 18D, 18E),
- electric vehicles (8A to 8D) each equipped with at least one storage battery (40A, 40B, 40C, 40D),
- means for measuring electric currents (C) and electric voltages in the system (2),
- a monitoring device (10) suitable for communicating with the electric vehicles (8A to 8D) and the measuring means,

the distribution network being suitable for supplying or receiving electricity at the recharge terminals (6A to 6E), the electric vehicles (8A to 8D) being adapted to be recharged or discharged on these terminals (6A to 6E) via a single-phase or three-phase electric link,
and the method comprising the following steps:

- a) identifying (100) an arrival of an electric vehicle (8A to 8D) at a recharge terminal (6A to 6E),
- b) identifying (212, 220) energy requirements of the electric vehicle (8A to 8D), and
- d) transferring (700) energy to or from the storage battery (40A to 40D) of the electric vehicle (8A to 8D),

the method comprising at least one additional step c), after step b) and prior to step d), for assigning (510, 520) at least one electric current phase (L1, L2, L3) carried by one of the three phase conductors to the recharge terminal (6A to 6E) at which an electric vehicle (8A to 8D) arrives, **characterised in that**, if the electric vehicle (8C) arriving at a terminal (6C) is three-phase and if one of the phases (16) is unable to accept additional loads, the loads assigned to the phases of the terminals (6A and 6B) are modified before the effective connexion of the three-phase vehicle to the terminal, to balance the loads on the three phases.

2. Method according to claim 1, **characterised in that** the additional step c) comprises at least the following sub-steps:

- c1) determining the levels of use of each of the phases,
- c2) actuating a switch (42) for assigning at least one phase to the recharge terminal (6A to 6D).

3. Method according to any of the above claims, **characterised in that**, if the electric vehicle (8A) arriving at a terminal (6A) is single-phase, the phase assigned for the recharging thereof is that least assigned to the vehicles already connected to the other terminals (6B to 6E).

4. Method according to claim 1, **characterised in that**, when modifying the loads assigned to the phases (L1, L2, L3) of the terminals (6A to 6E), the load corresponding to a single-phase vehicle (8A) already connected to a terminal (6A) is switched to another phase (L1, L2).

5. Method according to claim 4, **characterised in that**, when modifying the loads assigned to the phases (L1, L2, L3) of the terminals (6A to 6E), the load is switched to the phase (L1) subject to the lowest load.

6. Method according to any of the above claims, **characterised in that** it comprises a step consisting of setting for each phase conductor (16'A, 16'B, 12'C, 14'C, 16'C, 12'D, 14'D, 16'D) current set-points (I16'A, I16'B, I12'C, I14'C, I16'C, I12'D, I14'D, I16'D) for transferring electricity between the terminals (6A to 6D) and the electric vehicles (8A to 8D).

7. Method according to claim 6, **characterised in that** the current set-points (I16'A, I16'B, I12'C, I14'C, I16'C, I12'D, I14'D, I16'D) are such that they are suitable for optimally approximating the limits (P1lim, P2lim, P3lim) of the distribution contract.

8. System comprising at least:

- one three-phase current distribution network (4),
- recharge terminals (6A to 6E) for electric vehicles (8A to 8D) connected to the distribution network (4) via three phase conductors (12A, 14A, 16A, 12B, 14B, 16B, 12C, 14C, 16C, 12D, 14D, 16D, 12E 14E, 16E) and one neutral conductor (18A, 18B, 18C, 18D, 18E),
- electric vehicles (8A to 8D) each equipped with at least one storage battery (40A to 40D),
- means for measuring electric currents (C) and voltages in the system,
- a monitoring device suitable for communicating with the electric vehicles and the measuring means,
- means for identifying an arrival of an electric vehicle (8A to 8D) at a recharge terminal (6A to 6E),
- means for identifying energy requirements of the electric vehicle, and
- means for transferring energy to or from the storage battery (40A to 40D) of the electric vehicle (8A to 8D),

the distribution network (4) being suitable for supplying or receiving electricity at the recharge terminals (6A to 6E) and the electric vehicles (8A to 8E) being adapted to be recharged or discharged on these terminals (6A to 6E) via a single-phase or three-phase electric link, and

a device for distributing electricity in the system, said device for distributing electricity comprising calculation means (59) configured for implementing at least one step c) for assigning to the incoming electric vehicle (8A to 8D) at least one electric current phase carried by one of the three phase conductors (12A, 14A, 16A, 12B, 14B, 16B, 12C, 14C, 16C, 12D, 14D, 16D, 12E 14E, 16E) to the recharge terminal (6A to 6E) at which the electric vehicle (8A to 8D) arrives, **characterised in that** the said device for distributing electricity comprises means for modifying the assigning of loads to the phases of the terminals (6A and 6B), configured for, if the electric vehicle (8C) arriving at a terminal (6C) is three-phase and if one of the phases (16) is unable to accept additional loads, modify the loads assigned to the phases of the terminals (6A and 6B) before the effective connexion of the three-phase vehicle to the terminal, to balance the loads on the three phases.

9. System according to claim 8, **characterised in that** the means for performing the assigning of the phases for each of the recharge terminals (6A to 6E) are switching members (42) embodied by electronic switches.

Fig.1

*Fig.2*

Fig.3

Fig.4

**Fig.5**

Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009189456 A1
- JP 2011078288 A